Europäisches Patentamt

European Patent Office

Office européen des brevets

(19)

(11) Numéro de publication: **0 163 796**
**B1**

(12) **FASCICULE DE BREVET EUROPÉEN**

(45) Date de publication du fascicule du brevet: **25.10.89**

(51) Int. Cl.⁴: **B 23 B 29/034**

(21) Numéro de dépôt: **84440077.0**

(22) Date de dépôt: **28.12.84**

(54) **Tête d'alésage.**

(30) Priorité: **24.04.84 FR 8406903**
**13.09.84 FR 8414315**

(43) Date de publication de la demande:
**11.12.85 Bulletin 85/50**

(45) Mention de la délivrance du brevet:
**25.10.89 Bulletin 89/43**

(84) Etats contractants désignés:
**AT BE CH DE GB IT LI LU NL SE**

(56) Documents cité:
**DE-A-2 411 394**
**DE-A-2 918 243**
**DE-A-3 037 566**
**DE-A-3 044 862**
**DE-A-3 049 026**
**DE-A-3 121 907**
**DE-C-815 754**
**DE-C-885 951**
**FR-A-2 117 330**
**US-A-3 069 932**
**US-A-3 635 572**

(73) Titulaire: **Pfalzgraf, Emile, 7, rue de Neuwiller, F-67330 Bouxwiller (FR)**

(72) Inventeur: **Pfalzgraf, Emile, 7, rue de Neuwiller, F-67330 Bouxwiller (FR)**

(74) Mandataire: **Nuss, Pierre, 10, rue Jacques Kablé, F-67000 Strasbourg (FR)**

LIBER, STOCKHOLM 1989

## Description

La présente invention concerne le domaine de l'usinage par alésage sur machines conventionnelles ou à commande numérique, sur centres d'usinage ou au moyen d'équipements d'ateliers flexibles, et a pour objet une tête d'alésage.

Il est connu par DE-A-2 411 394 une tête d'ébauche d'alésage de type couronne à monter sur un support fixé par deux vis, une rainure droite traversant la tête.

Dans ce dispositif, les porte-plaquettes sont constituées par deux blocs de la largeur de la rainure, placés dos à dos, fixés séparément chacun par deux vis et serrés grâce à deux fentes prévues dans la tête. Ces deux porte-plaquettes sont, par ailleurs, guidées et montées au moyen de dentures sur les côtés, sans indexation de position.

On connaît également, par FR-A-2 117 330, une barre d'alésage dont le système de coupe des porte-plaquettes et le système de réglage sont deux éléments séparés très complexes.

Par ailleurs, DE-A-3 044 862 décrit des outils d'alésage à une coupe présentant un corps monobloc et dont la vis de réglage de l'outil est bloquée dans le corps par l'intermédiaire d'un plat et d'une vis et le piston déplacé au moyen de cette vis est retenu dans le dispositif au moyen d'une bille. Ce mode de réalisation présente un jeu de fonctionnement important entraînant une faible précision du dispositif d'entraînement du piston et une usure rapide dudit dispositif.

Par DE-C-885 591, on connaît des porte-outils de tours parallèles qui sont destinés à être montés sur le chariot transversal et qui servent à la fixation d'outils de tours classiques.

Ces porte-outils ne sont pas utilisables comme porte-outils tournants et leur dispositif d'indexage au moyen d'une bille et de tétons coniques pénétrant dans des logements coniques n'est pas utilisable dans le cas d'un porte-outils tournant, du fait qu'il ne peut assurer une solidarisation sûre en rotation.

DE-A-3 037 566 décrit la conception d'une vis de réglage au moyen d'une pièce spéciale empêchant un rattrapage de jeu et entraînant des défauts de précision très préjudiciables pour les pièces à usiner. Ce document décrit, en outre, des porte-plaquettes ou outils qui sont fixés dans un carré incliné du piston de la vis de réglage et bloqués au moyen d'une vis, ce qui entraîne un usinage compliqué dudit piston.

Enfin, FR-A-2 117 330 décrit une barre d'alésage avec deux porte-plaquettes réglables simultanément au moyen d'une vis unique. Le système de coupe de ces porte-plaquettes et le système de réglage sont deux éléments séparés très complexes.

La présente invention a pour but de pallier ces inconvénients.

Elle a, en effet, pour objet une tête d'alésage, constituée par un corps monte sur un support qui est muni d'une queue de fixation, cylindrique du type modulaire ou autre, ou d'une queue adaptable directement sur les machines, ou d'une queue avec attachement au cône morse ou au cône américain, ou encore d'une queue filetée TR, ou autre, auquel il est fixé rigidement par une vis d'assemblage, par un dispositif d'indexage en toutes positions du corps par rapport au support, et par un ensemble de support et de déplacement réglable de l'outil de coupe en direction perpendiculaire à l'axe du corps.

Conformément à l'invention la tête d'alésage est essentiellement constituée par un corps monté sur un support, par un dispositif d'indexage du corps par rapport au support, et par un ensemble de support et de déplacement réglable de l'outil de coupe perpendiculairement à l'axe du corps.

L'invention sera mieux comprise grâce à la description ci-après, qui se rapporte à des modes de réalisation préférés, donnés à titre d'exemples non limitatifs expliqués avec référence aux dessins schématiques annexés, dans lesquels:

la figure 1 est une vue en élévation latérale et partiellement en coupe d'une tête d'alésage conforme à l'invention ;

la figure 2 est une vue en coupe suivant A - A de la figure 1 ;

la figure 3 est une vue analogue à celle de la figure 1 d'une variante de réalisation de l'invention ;

la figure 4 est une vue en plan et partiellement en coupe suivant la figure 3 ;

la figure 5 est une vue en élévation frontale suivait la figure 3 ;

la figure 6 est une vie en plan d'une variante de réalisation du corps de la tête d'alésage suivant la figure 1 ;

la figure 7 est une vue en élévation, par l'arrière suivant la figure 6 ;

la figure 8 est une vue en élévation latérale suivant la figure 6 ;

la figure 9 est une vue analogue à celle de la figure 8 d'une variante de réalisation du montage du corps ;

la figure 10 est une vue en élévation frontale d'une semelle de fixation ;

la figure 11 est une vue en plan, partiellement en coupe de a semelle ;

la figure 12 est une vue en coupe suivant B - B de la figure 10 ;

la figure 13 est une vue en élévation frontale d'une variante de réalisation de la semelle ;

la figure 14 est une vue en élévation frontale d'une variante de réalisation d'un corps ;

la figure 15 est une vue en coupe suivant C - D de la figure 14 ;

la figure 16 est une vue en coupe suivant D - D de la figure 14 ;

la figure 17 est une vue analogue à la figure 14 d'une autre variante de réalisation du corps ;

la figure 18 est une vue en coupe partielle suivant F de la figure 17 ;

la figure 19 est une vue en élévation latérale et partiellement en coupe d'une variante de réalisation de la tête d'alésage conforme à l'invention ;

la figure 20 est une vue en coupe suivant E - E de la figure 19 ;

la figure 21 est une vue en élévation latérale et en coupe d'une variante de réalisation de l'invention ;

la figure 22 est une vue en plan et partiellement en coupe suivant la figure 21 ;

la figure 23 est une vue analogue à celle de la figure 19 d'une autre variante de réalisation de l'invention ;

la figure 24 est une vue en plan et partiellement en coupe suivant la figure 23 ;

la figure 25 est une vue en plan d'un porte-plaquette conforme à l'invention ;

la figure 26 est une vue en élévation frontale suivant la figure 25 ;

la figure 27 est une vue en élévation frontale d'une variante de réalisation d'un corps ;

la figure 28 est une vue en élévation par l'arrière, partiellement en coupe, du support d'un corps, et

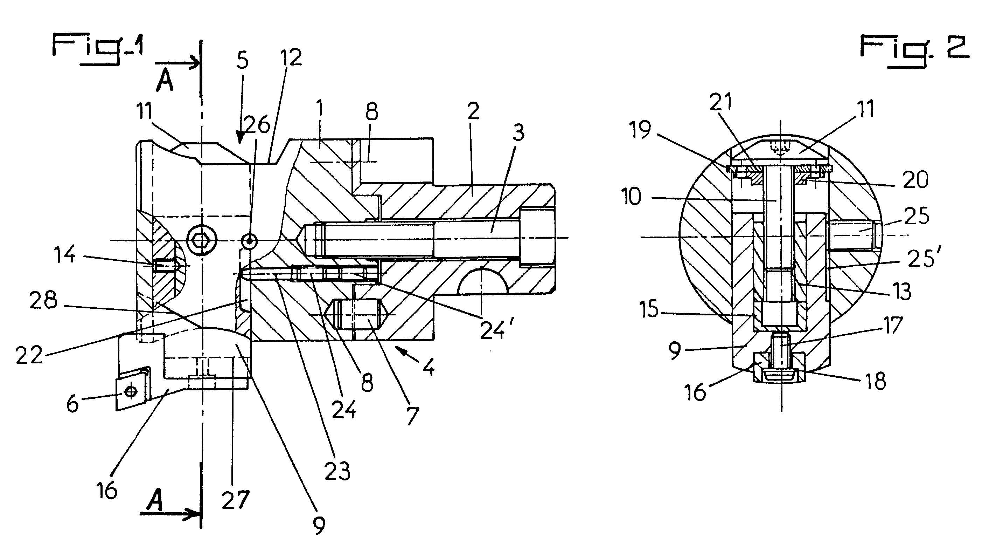

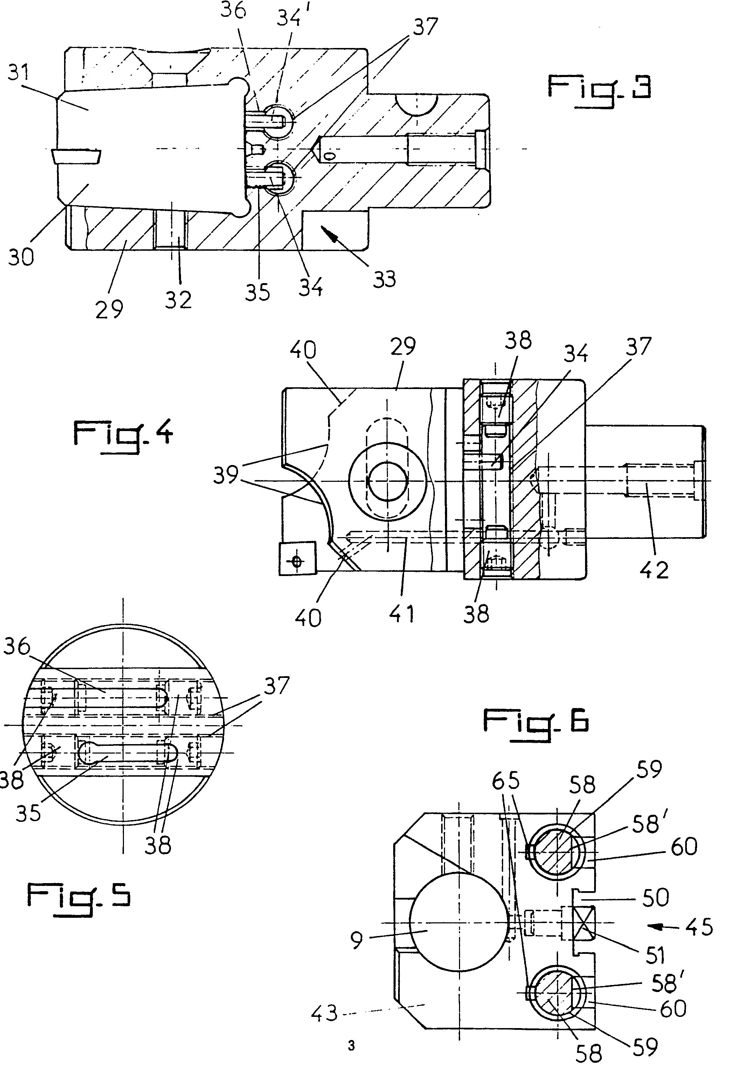

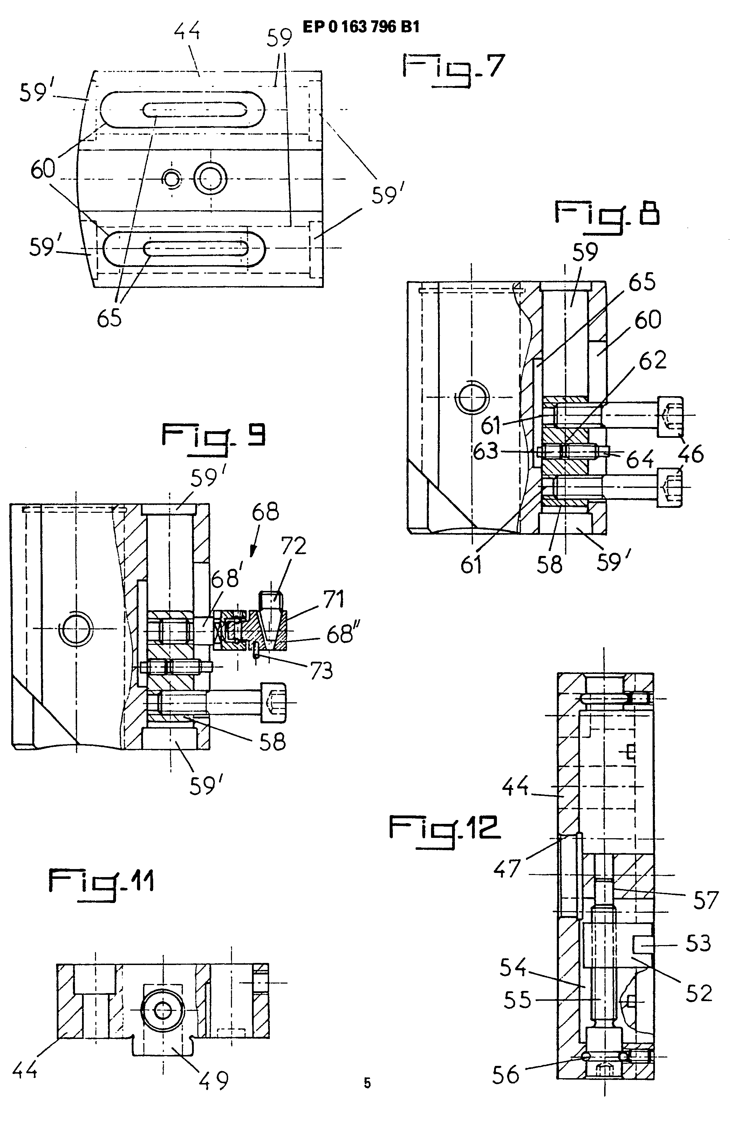

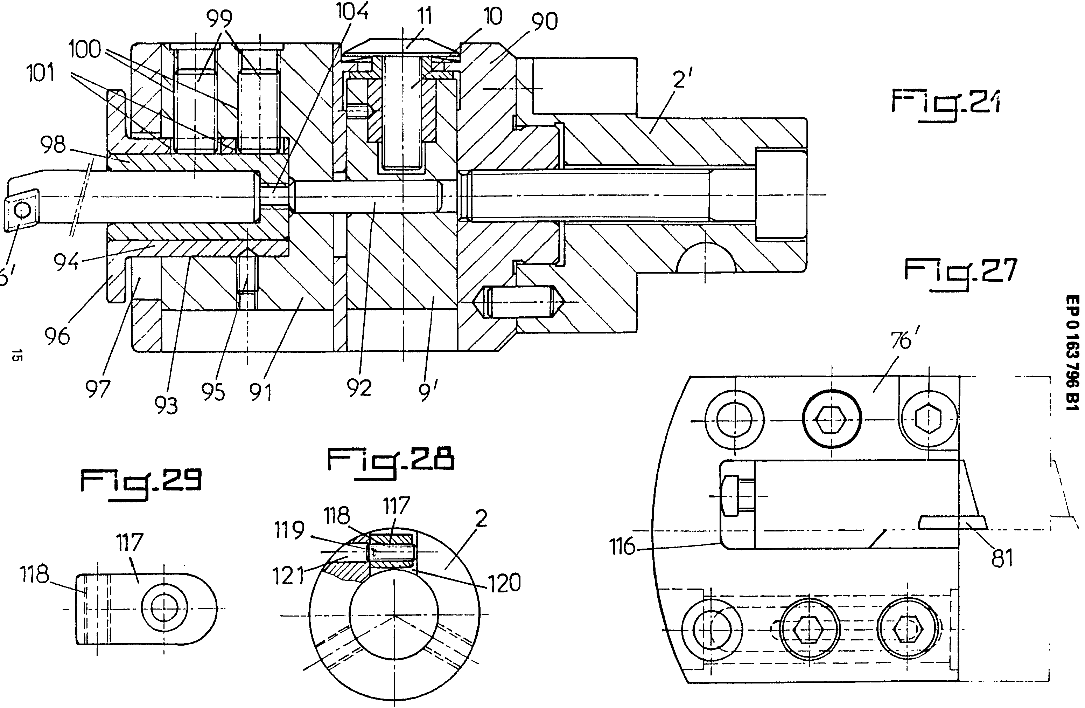

la figure 29 est une vue en plan d'un tenon d'entraînement. Conformément à l'invention, et comme le montrent plus particulièrement, à titre d'exemple, les figures 1 et 2 des dessins annexés, la tête d'alésage, est essentiellement constituée par un corps 1 monté sur un support 2 qui est muni d'une queue de fixation, cylindrique du type modulaire ou autre, ou d'une queue adaptable directement sur les machines, ou d'une queue avec attachement au cône morse ou au cône américain, ou encore d'une queue filetée TR, ou autre, auquel il est fixé rigidement par une vis d'assemblage 3, par un dispositif 4 d'indexage en toutes positions du corps 1 par rapport au support 2, et par un ensemble 5 de support et de déplacement réglable de l'outil de coupe 6 en direction perpendiculaire à l'axe du corps 1.

Le dispositif 4 d'indexage du corps 1 par rapport au support 2 est constitué par un téton cylindrique 7 solidaire du support 2 et pouvant coopérer avec des trous 8 de diamètre correspondant disposés à intervalles réguliers sur la face arrière du corps 1, ces trous 8 étant avantageusement au nombre de douze et décalés de 30°. Ce mode d'indexage permet un réglage de la position angulaire de l'outil 6 dans la meilleure position, à 15° près, lors de l'arrêt de la broche, pour débuter ou terminer les opérations d'usinage.

L'indexage peut également être réalisé par prévision de zones de friction entre le corps 1 et le support 2, de crantages, de dentures, ou autres.

L'ensemble 5 de support et de déplacement réglable de l'outil 6 est constitué par un piston 9 monté à coulissement avec tolérances très serrés dans un alésage s'étendant perpendiculairement à l'axe du corps 1 près de son extrémité avant, et actionné au moyen d'une vis micrométrique à pas fin 10, qui, d'une part, est munie d'une tête large 11 à flanc incliné, dont le centre est pourvu d'un six pans creux de manoeuvre, et dont le flanc incliné présente des graduations coopérant avec des graduations prévues sur un méplat 12 du corps 1, et, d'autre part, coopère avec un écrou 13 solidaire du piston 9 par collage, une vis pointeau 14 assurant son serrage final, cet écrou 13 étant positionné dans le piston 9 au moyen d'une butée 15 fermant simultanément la cavité de l'écrou opposée à la vis 10 ainsi qu'un trou fileté servant à la fixation d'une porte-plaquette 16 de l'outil 6 sous forme de plaquette au moyen d'une vis 17 et d'une rondelle 18.

Grâce aux graduations prévues sur la vis micrométrique 10 et sur le méplat 12 corps 1, il est possible de contrôler parfaitement l'avance du piston 9 et donc de l'outil 6, par exemple de 0,01 mm au diamètre.

L'écrou 13 n'est pas monté serré afin de ne subir aucune déformation lors de son introduction dans le piston 9, et la butée 15 sert, d'une part, d'appui à l'écrou 13, et, d'autre part, à éviter toute entrée de corps étranger dans l'écrou 13 et la détérioration éventuelle du filetage micrométrique par un tel corps.

Le maintien de la vis 10 dans le corps 1 est assuré par un segment élastique 19 fixé dans une gorge de l'alésage du corps 1, par un contre-écrou 20, et par une entretoise 21, dont l'épaisseur est légèrement plus importante que celle du segment 19 afin de permettre un jeu de montage de la vis 10 réduit à un minimum. Selon une variante de réalisation de l'invention, non représentée aux dessins annexés, afin d'éviter tout jeu de fonctionnement, une rondelle compressible du type Belleville est insérée au montage entre le segment élastique 19 et la face inférieure de la tête de la vis 10, avec une compression préalable, de préférence aux deux tiers, l'épaisseur de l'entretoise 21 étant alors égale à celle du segment 19 augmentée de celle de la rondelle comprimée.

Le maintien et le guidage du piston 9 dans son alésage sont assurés par une rainure conique 22 prévue le long d'une génératrice et coopérant avec une aiguille rectifiée 23 à bout conique, dont la pression d'application dans la rainure 22 est réglée au moyen d'une vis 24, une deuxième vis 24' collée dans le filetage assurant l'inviolabilité du réglage, et par une vis 25 de blocage du piston en position, qui s'appuie sur un méplat 25' du piston 9.

Ainsi, le déplacement du piston 9 peut être parfaitement contrôlé sans possibilité de mouvement circulaire et son blocage en position est assuré par la vis 25.

La lubrification du piston dans son alésage est réalisée au moyen d'un graisseur 26 dont l'orifice de sortie est avantageusement tangent à l'alésage au niveau de l'axe du corps 1, de sorte qu'est formé un petit espace permettant la lubrification de l'ensemble.

A son extrémité libre, le piston 9 est muni d'une rainure 27 de logment du porte-plaquette 16, qui est maintenu appliqué pendant le travail contre un dégagement 28 prévu dans l'extrémité libre du corps 1.

Le porte-plaquette 16 peut être fixé et centré dans le piston 9, de toutes autres manières, à savoir par un centrage en croix, ou autre, et tous types de plaquettes peuvent être montés sur ledit porte-plaquette 16.

Selon une variante de réalisation de l'invention, non représentée aux dessins annexés, le piston 9 peut également être pourvu d'un dégagement longitudinal s'étendant le long d'une génératrice, muni de l'empreinte du pas de la vis micrométrique 10, et destiné à coopérer avec cette dernière, qui présente alors un diamètre plus important et s'étend tangentiellement au piston 9.

Selon une autre variante de réalisation de l'invention, et comme le montrent les figures 3 à 5 des dessins annexés, pour des travaux d'ébauche, la tête d'alésage est constituée par un corps 29 présentant à sa partie arrière une queue de fixation, ou analogue, et à sa partie avant un logement ouvert présentant des côtés avantageusement légèrement inclinés en s'évasant en direction de la queue, ou des côtés parallèles à l'axe munis de rainures, ou de dentures de guidage rectifiées, ou analogues, par des porte-plaquettes 30 et 31 logés de manière réglable en position dans le corps 29, par une vis de blocage des porte-plaquettes 30 et 31 entre les côtés du logement coopérant avec un trou taraudé 32 d'un côté dudit logement et traversant l'autre côté ainsi qu'une rainure transversale des porte-plaquettes, et par un dispositif 33 de réglage des porte-plaquettes.

Une telle tête d'alésage ne nécessite pas un indexage du fait qu'elle travaille avec deux outils, mais doit être d'une plus grande robustesse que la tête décrite précédemment. De même, la précision du réglage peut être moindre, mais les deux porte-plaquettes doivent pouvoir être réglés séparément

A cet effet, le dispositif 33 de réglage des porte-plaquettes 30 et 31 est constitué par deux piges 34, 34' solidaires chacune d'un porte-plaquette 30 et 31 et pénétrant à travers deux rainures parallèles 35 et 36 dans deux trous filetés 37 traversant le corps 29 de part en part, l'une des rainures 36 étant ouverte à une extrémité (figure 5), et l'autre rainure 35 étant fermée, et l'extension transversale desdites rainures est définie par la longueur de réglage des porte-plaquettes 30 et 31, et par deux paires de vis 38 engagées dans les trous filetés 37 pour actionner en déplacement les piges 34 et 34' à partir des deux côtés des trous 37.

La rainure fermée 35 est prévue pour l'insertion du premier porte-plaquette 30 par la face avant du corps 29, tandis que l'autre rainure 36 est destinée à permettre un montage du deuxième porte-plaquette 31 par simple emboîtement latéral.

Le logement du corps 29 présente, de manière connue, dans son fond, le long des côtés, des dégagements destinés à favoriser l'usinage de ses parois.

Dès que le réglage des porte-plaquettes 30 et 31 est effectué, la vis de blocage est serrée dans le trou 32 de manière à pincer lesdits porte-plaquettes, et les vis 38 sont alors appliquées de part et d'autre contre les piges 34 et 34' respectives, maintenant parfaitement les porte-plaquettes 30 et 31 en position.

Bien entendu, le déplacement des porte-plaquettes peut également être effectué d'autres manières, par exemple au moyen de vis coopérant directement avec les porte-plaquettes, ou analogues.

A sa partie avant, le corps 29 présente sur chaque côté un dégagement 39 permettant une évacuation aisée des copeaux, ainsi qu'un orifice 40 d'arrivée de lubrifiant de refroidissement, qui arrive à travers des canaux 41 reliés à un canal central arrière 42. D'autres dispositions des canaux de lubrification sont possibles, notamment avec arrivée du lubrifiant au fond du logement et passage par les porte-plaquettes, ou encore une éjection du lubrifiant par un trou transversal perpendiculaire à l'axe du corps, etc.

Selon une autre caractéristique de l'invention, un troisième porte-plaquette non représenté, peut être monté à la place de l'un des deux premiers porte-plaquettes 30 et 31 et présenter un outil décalé longitudinalement par rapport à l'autre outil afin de réaliser une coupe différée et une division de la largeur des copeaux. Ainsi, on obtient une meilleure répartition de l'effort de coupe, et la lubrification centrale améliore l'éjection et l'évacuation des copeaux.

Une telle conception de tête d'alésage d'ébauche permet d'obtenir une grande robustesse de ladite tête ainsi qu'un réglage simple et facile et un serrage efficace des porte-plaquettes.

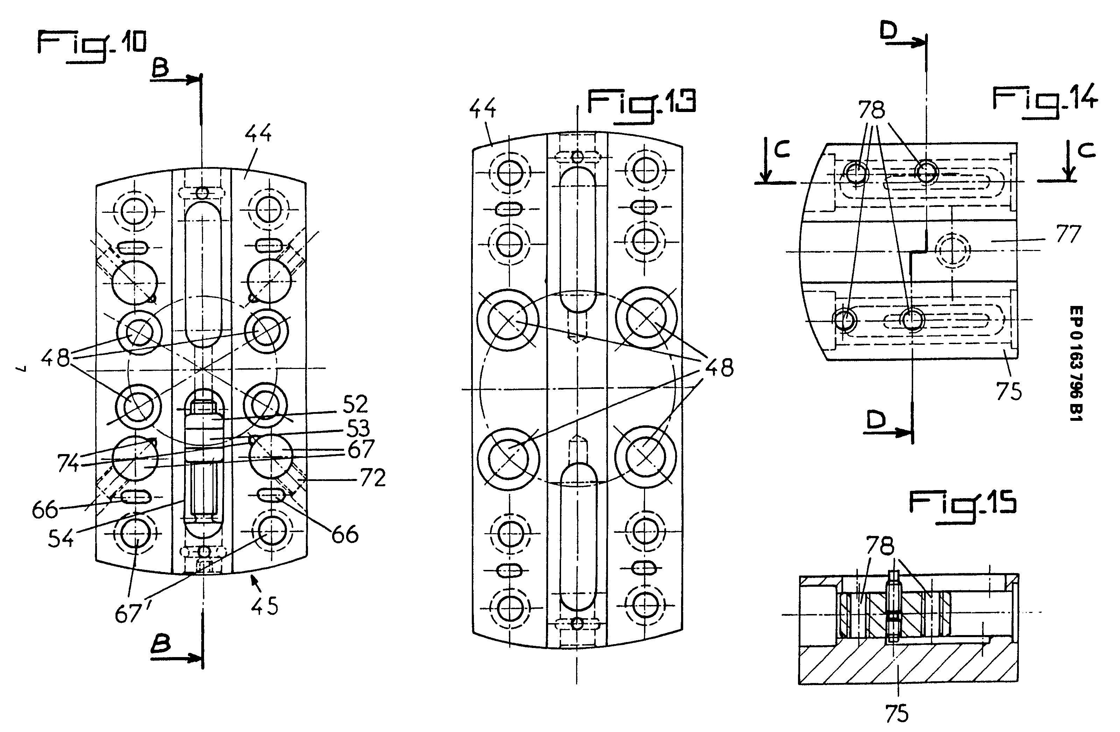

Pour la réalisation de grands diamètres d'alésages, la tête d'alésage est constituée, comme le montrent les figures 6 à 13 des dessins annexés, par un corps 43 de conception identique à celle du corps 1 suivant les figures 1 et 2 en ce qui concerne les réglages, le piston 9, la fixation et les porte-plaquettes, par une semelle 44 (figures 10 à 13) de fixation et de guidage du corps 43 au moyen de vis 46, montée avec possibilité d'indexage sur un attachement (non représenté), et par un dispositif 45 de déplacement guidé du corps 43.

La semelle 44 est pourvue d'un alésage 47 de centrage sur un moyeu correspondant d'un attachement, connu en soi, cet attachement étant pourvu, en outre, de trous espacés régulièrement sur un diamètre et destinés à coopérer avec des vis 48 pour la fixation et l'indexage de la semelle 44. Les trous de l'attachement seront avantageusement espacés entre eux de 30°.

La semelle 44 est munie sur sa face tournée vers le corps 43 d'une languette longitudinale 49 (figure 11) destinée à coopérer avec une rainure de centrage correspondante 50 du corps 43, et permettant un déplacement guidé dudit corps 43 sur la semelle 44.

Le dispositif 45 de déplacement guidé du corps 43 est constitué par un entraîneur 51 présentant deux méplats parallèles (figure 6) et fixé dans le corps 43, dans l'axe de la rainure 50, par un écrou

52 muni d'une rainure transversale 53 destinée à coopérer avec l'entraîneur 51, guidé en translation dans une rainure 54 de la semelle 44, et entraîné par une vis de réglage 55, qui est assujettie en translation par un montage à gorge et billes 56, et guidée à son autre extrémité dans un logement 57 de la semelle.

Le maintien et le guidage en déplacement du corps 43 sur la semelle 44, lors du réglage, sont assurés, en outre, par deux piges 58 montées à coulissement dans deux trous 59 percés dans le corps 43 et s'étendant parallèlement à la rainure de centrage 50, ces trous étant reliés à la face d'application du corps 43 sur la semelle 44 chacun par une rainure 60 de passage des vis de fixation 46, qui sont vissées dans des trous filetés 61 s'étendant perpendiculairement à l'axe des piges 58, qui présentent sur toute leur longueur, du côté des vis 46 un méplat 58' et les trous 59 sont fermés, après montage des piges 58, par des bouchons collés dans des embrèvements 59' prévus à leurs extrémités.

Entre les trous filetés 61 est prévu un trou fileté supplémentaire 62 orienté dans la même direction que les trous 61, mais, de préférence, de plus faible diamètre, dans lequel pénètrent deux vis 63 et 64, dont l'une, 63, coopère avec une rainure 65 du corps 43 et empêche la rotation de la pige 58 correspondante dans son logement et forme un arrêt pour le déplacement du corps 43 sur la semelle 44, tandis que l'autre, 64, tournée vers la semelle 44, dépasse la face correspondante du corps 43 et coopère avec une rainure correspondante 66 de la semelle 44 pour le positionnement du corps 43 sur ladite semelle 44 lors du montage, de sorte que les trous filetés 61 des piges 58 sont alignés avec ceux 67 et 67' de la semelle 44 (figure 10).

Grâce à cette constitution, deux modes de déplacements peuvent être prévus pour l'outil, à savoir un déplacement rapide au moyen de la vis de réglage 55 placée dans la semelle 44, et un déplacement micrométrique au moyen de la vis actionnant le piston 9. Le déplacement du corps 43 n'est autorisé qu'après un léger desserrage des vis 46 de montage et de blocage du corps 43 sur la semelle 44. Lors des déplacements et réglages du corps 43, seul ce dernier est déplacé par rapport à l'espace restant disponible dans les trous 59 des piges 58.

Les butées de fin de course de déplacement du corps 43 sont constituées, d'une part, par la tête de la vis 55, et, d'autre part, par l'extrémité de la rainure 60, qui coopèrent dans les positions extrêmes, respectivement avec l'écrou 52 et avec une vis 46.

La semelle 44 est munie d'au moins deux ensembles écrou 22 - vis de réglage 55 et trous pour vis de montage et de blocage 46.

La fixation de la semelle sur son attachement pourrait également être réalisée par une queue d'aronde, par une denture rectifiée, ou autre. De même, le guidage du corps 43 sur la semelle 44 pourrait être réalisé par d'autres moyens de centrage et de guidage.

Pour les opérations de finition d'alésages importants, effectuées avec une seule tête de finition, un contre-poids est avantageusement fixé sur l'autre côté de la semelle 44 au moyen des trous libres pour les vis de montage et de blocage.

Dans le cas de têtes d'alésage de diamètre moyen ne permettant pas une fixation du corps 43 directement sur la semelle 44 au moyen des vis 46, du fait de l'encombrement de l'attachement, il est prévu deux vis 68 (figure 9) présentant une partie 68' munie d'un filetage pénétrant dans un trou 61 d'une pige 58 et une partie mâle 68'' pénétrant dans un alésage de la partie 68' tourné vers la semelle 44, cette partie 68'' étant retenue dans son alésage par une liaison gorge et billes 69 permettant un pivotement de la partie 68'' après serrage de la partie 68' dans la pige 58 au moyen de deux méplats 70 de la partie 68', et la partie 68'' est pourvue, près de son extrémité libre d'un trou conique 71, perpendiculaire à son axe, et dans lequel pénètre une vis à bout conique 72 fixée dans la semelle 44 et dont l'axe est décalé par rapport à celui du trou 71, et dans le prolongement du trou 71 est fixé, avec un léger décalage en direction du corps 43, un ergot 73 permettant le centrage de la base de la vis 68 pendant son introduction dans le trou 67 correspondant de la semelle 44 (figure 10) par coopération avec une rainure 74 dudit trou 67.

Ainsi, lorsque le bout conique de la vis 72 pénètre dans le trou 71, la vis de fixation 68' est serrée dans la semelle 44.

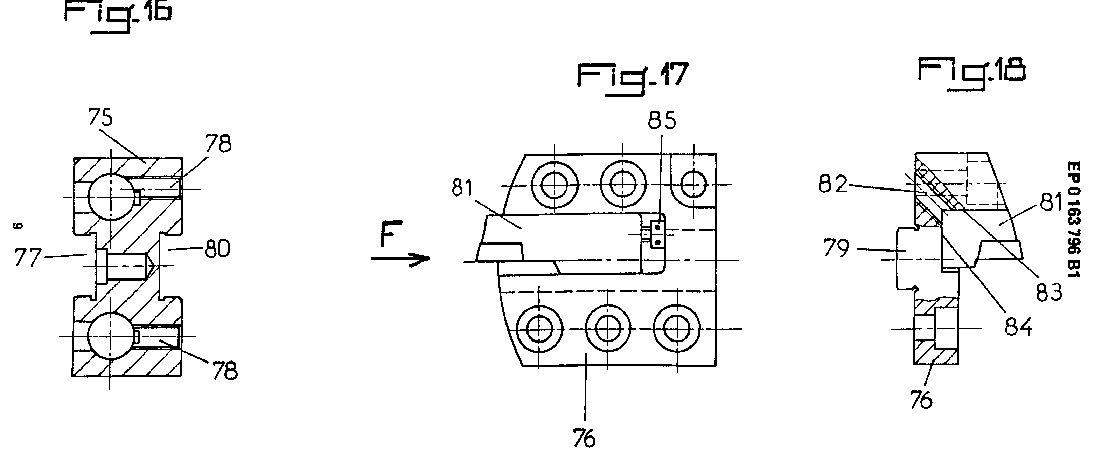

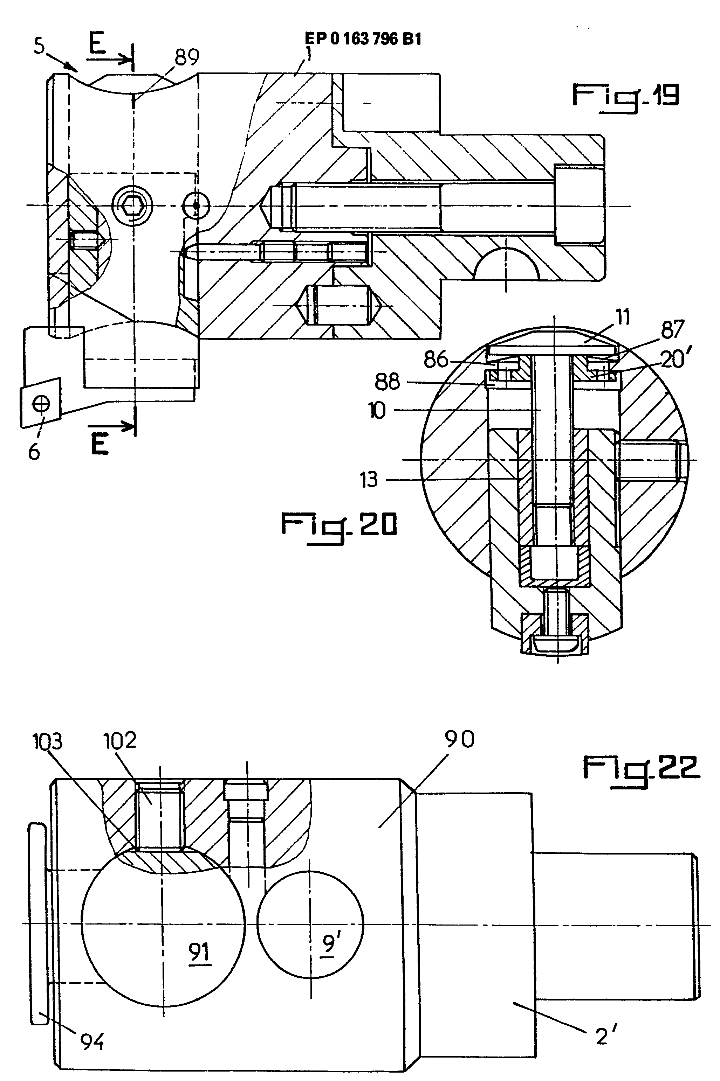

Les figures 14 à 18 représentent une autre variante de réalisation de l'invention, dans laquelle le corps est sous forme d'un bloc support intermédiaire 75 (figures 14 à 16) ou d'un bloc support supérieur 76 (figures 17 et 18), le bloc intermédiaire 75 étant fixé de manière réglable sur la semelle 44, centré sur cette dernière au moyen d'une rainure 77, et pourvu de trous filetés 78 de réception des vis de fixation du bloc supérieur 76, qui est guidé sur le bloc intermédiaire 75 au moyen d'une languette 79 coopérant avec une rainure 80 dudit bloc 75, et qui est muni de deux logements supplémentaires de vis de fixation permettant un déplacement supplémentaire du bloc 76 sur le bloc 75.

Des têtes conformes à celles décrites ci-dessus sont particulièrement destinées à des alésages ébauches de grand diamètre et la tête formant le bloc supérieur 76 utilise comme support de plaquettes des cartouches 81 disponibles dans le commerce, fixées généralement au moyen d'un filetage en biais 82, et prenant appui sur des faces perpendiculaires 83 et 84, une vis 85 étant prévue pour le réglage fin, par l'arrière.

La fixation et le réglage des corps en forme de blocs 75 et 76 sur la semelle 44 sont identiques à ceux des corps 29 et 43, mais leur conception est nettement simplifiée.

Conformément à une autre caractéristique de l'invention, et comme le montrent plus particulièrement, à titre d'exemple, les figures 19 et 20 des dessins annexés, la vis micrométrique à pas fin 10, qui sert à l'actionnement du piston 9 de l'ensemble 5 de support et de déplacement réglable de l'outil 6, est maintenue au moyen d'un épaulement intérieur 86 usiné dans l'alésage de logement du piston 9 et d'un contre-écrou 20', qui est positionné de manière à buter contre la tête 11 de la vis 10 et à s'appuyer par un bord élargi sous l'épaulement 86. Une rondelle compressible 87 s'appuie, par ailleurs, sous la tête 11 de la vis 10 et sur l'autre face de l'épaulement 86 pour assurer, après une légère compression, un maintien sans jeu de la vis 10 dans le corps 1.

Grâce à ce mode de réalisation, le logement de la tête 11 permet le centrage et le positionnement de la tête d'alésage pour la rectification de l'alésage du piston 9, et la précision desdites têtes d'alésage est notablement améliorée.

En outre, grâce à ce mode de réalisation, l'ensemble 5 de support et de déplacement réglable de l'outil 6 présente une meilleure étanchéité à toute pénétration de liquide.

Une gorge de dégagement 88 prévue sous l'épaulement 86 permet la rectification de la partie utile de l'alésage de logement du piston 9, et le positionnement du contre-écrou 20' avec sa tête inversée permet d'augmenter la longueur du filetage de l'écrou 13 de la vis 10, cet écrou 13 étant à fleur avec la face du piston 9. Ainsi, la longueur du filetage de l'écrou 13 en contact avec la vis 10 est augmentée, de sorte que ledit filetage peut présenter un pas plus fin entraînant une précision améliorée et une lecture simplifiée du vernier constitué par des graduations prévues sur le flanc de la tête 11 de la vis 10 et par un trait unique 89 sur le corps 1.

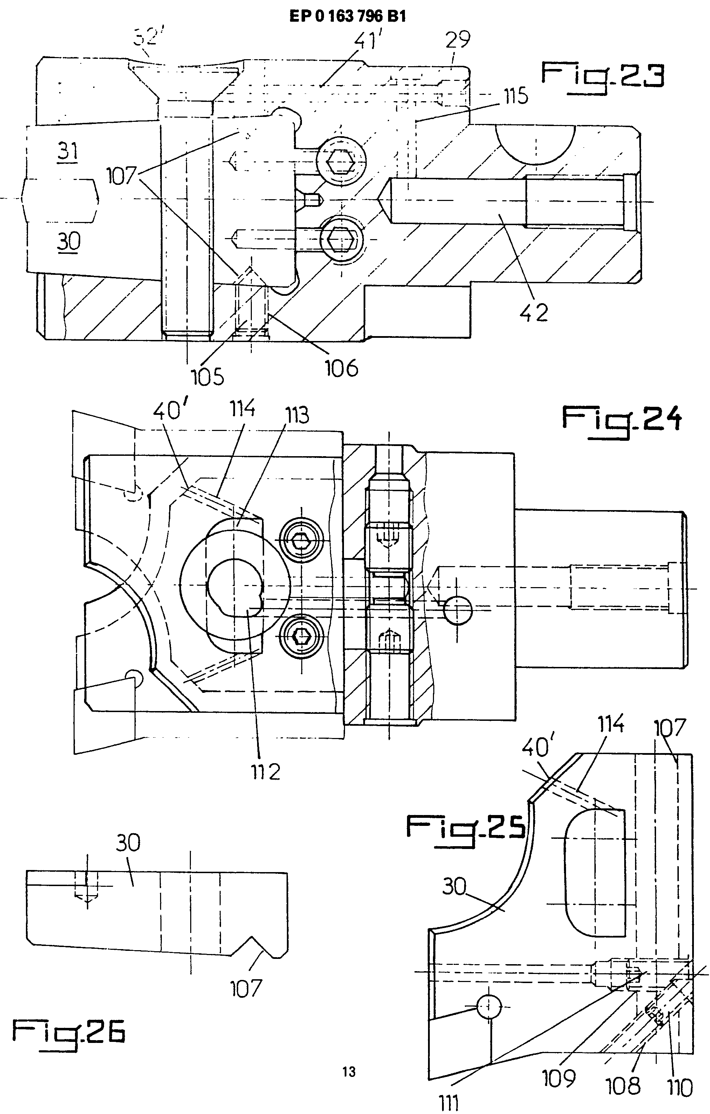

Selon une autre variante de réalisation de l'invention, et comme le montrent les figures 21 et 22 des dessins annexés, pour les travaux de finition, notamment de petits diamètres, la tête d'alésage est constituée par un corps 90 monté sur un support 2' et dans lequel sont montés à coulissement radial, parallèles entre eux, un piston 91 de support d'un outil 6' par l'intermédiaire d'un alésage 93 et un piston 9' d'actionnement du piston 91 solidarisé avec ce dernier par l'intermédiaire d'une goupille fendue 92, ou analogue, la commande du déplacement du piston 9' étant effectuée par une vis micrométrique à pas fin 10 munie d'une tête large 11.

Le piston 9' et son moyen d'actionnement sont analogues au piston 9 suivant les figures 19 et 20 en ce qui concerne les réglages et le maintien de la vis 10 sans jeu.

La goupille fendue 92 assure, en outre, un assujettissement des pistons 9' et 91 contre une rotation indésirable, du fait que l'alésage 93 de réception de l'outil 6' doit être fixé rigoureusement dans l'axe du corps 90, ledit outil 6' étant lui-même aligné avec cet axe.

La fixation de l'outil 6' dans l'alésage 93 du piston de support 91 est effectuée au moyen d'une bague 94 montée dans l'alésage 93 et assujettie en position par une vis-pointeau 95, un épaulement 96 de cette bague 94 étant en saillie hors du corps 90 et protégeant une ouverture 97

de ce dernier nécessaire pour le déplacement de l'outil, une bague fendue 98 pouvant entourer, le cas échéant, la queue de l'outil 6', et être serrée dans la bague 94 au moyen de vis 99 montées dans des trous filetés 100 du piston 91 et traversant des perçages 101 de la bague 94.

Le piston 91 est bloqué en position de travail au moyen d'une vis de pression 102 fixée dans le corps 90 et agissant perpendiculairement au sens de déplacement sur un méplat 103 du piston 91. La bague fendue 98 est munie d'un filetage 104 pour son extraction de la bague 94.

Selon une autre caractéristique de l'invention, dans le cas d'une tête d'alésage destinée à des travaux d'ébauche, son corps 29, logeant des porte-plaquettes 30 et 31, est muni de deux paires opposées de vis-pointeaux 105 pénétrant dans des trous filetés 106 du corps 29 et s'appliquant par leur extrémité dans une rainure 107 prévue sur les faces correspondantes des porte-plaquettes 30 et 31, (figures 23 et 24), et au moins un porte-plaquette est pourvu d'un trou fileté 108 s'étendant obliquement à sa face d'application dans le fond du logement ou d'un trou fileté 109 perpendiculaire à cette face, une vis-pointeau correspondante 110 ou une vis à fond plat 111 étant montée dans le trou 108 ou 109, (figures 25 et 26).

Les vis-pointeaux 105 permettent d'appliquer de manière très précise les faces arrière des porte-plaquettes 30 et 31 contre le fond de leur logement dans le corps 29 de sorte que leur positionnement est toujours assuré de manière très précise. En outre, la prévision d'un trou fileté 108 ou 109 et d'une vis correspondante 110 ou 111 permet, par vissage de ladite vis, après léger déblocage des vis 105 correspondantes de soulever et de faire pivoter légèrement la plaquette dans le logement, de sorte que la coupe de l'outil peut être décalée légèrement en hauteur par rapport à l'outil de l'autre plaquette. Ainsi, un porte-plaquette supplémentaire à outil décalé peut être évité.

Selon une autre caractéristique de l'invention, pour la lubrification centrale des outils de coupe, il est prévu dans le corps 29 un canal 41', qui débouche sous la tête de la vis 32' de serrage des porte-plaquettes 30 et 31, le logement de cette tête présentant une ouverture 112 le mettant en communication avec les rainures transversales 113 des porte-plaquettes 30 et 31, ces rainures 113 formant chambre de répartition pour le liquide et étant reliées chacune par deux trous obliques 114 à des orifices de sortie 40'.

Ainsi est assurée une lubrification des plaquettes aux endroits les mieux appropriés et permettant une évacuation parfaite des copeaux.

Bien entendu, le canal 41' peut être relié à un canal central arrière d'alimentation 42 de manière connue par un canal 115 perpendiculaire à l'axe.

Conformément à une autre variante de réalisation de l'invention, pour l'usinage d'alésages ébauches de grand diamètre, un bloc support supérieur 76', (figure 27), est muni d'une rainure 116, dont l'ouverture débouche du côté intérieur du bloc, de sorte qu'un outil à plaquette 81, qui y est monté, peut être déplacé en direction de ce côté au moyen de sa vis de réglage du bloc 76'. Grâce à ce mode de réalisation il est possible de réaliser avec le bloc supérieur 76' des travaux de tournage.

Selon une autre caractéristique de l'invention, pour assurer une fixation sans auto-serrage de la queue modulaire du support 2 dans son attachement, ou autre pièce femelle de réception, il est prévu, un tenon amovible 117 monté dans l'attachement au moyen d'une vis à tête noyée et pourvu d'un trou fileté 118 s'étendant transversalement du tenon, et dans lequel est serrée une vis 119, qui s'appuie par son extrémité sur l'une des faces du logement 120 du support 2, poussant, en réaction, la face opposée du tenon 117 contre l'autre face du logement 120, un trou de passage 121 étant prévu d'un côté du logement pour le passage de l'outil de manoeuvre de la vis 119.

Ce mode de réalisation de liaison du support 2 avec le dispositif d'entraînement permet d'éviter les vibrations possibles dues à un déblocage de l'auto-serrage, notamment ensuite de travaux à coupe non continue par chocs. En effet, dans un tel cas les chocs répétés entraînent, dans les dispositifs connus, un déplacement continu du tenon dans les deux sens, dans son logement, provoquant un desserrage des vis de blocage.

Selon une autre caractéristique de l'invention, non représentée aux dessins annexés, le tenon présente une largeur égale à celle du logement du support 2 et les logements sphériques de la queue de ce dernier sont légèrement décalés par rapport à leur vis de serrage correspondante. Ainsi, le serrage de l'une ou l'autre vis provoque immédiatement une légère rotation du support 2, qui a pour conséquence d'appliquer fortement la face correspondante du tenon contre la face de son logement. Un tel mode de réalisation est particulièrement adapté l'exécution de travaux très durs.

## Revendications

1. Tête d'alésage, constituée par un corps (1) monté sur un support (2) qui est muni d'une queue de fixation, cylindrique du type modulaire ou autre ou d'une queue adaptable directement sur les machines, ou d'une queue avec attachement au cône morse ou au cône américain, ou encore d'une queue filetée TR, ou autre, auquel il est fixé rigidement par une vis d'assemblage (3), par un dispositif (4) d'indexage en toutes positions du corps (1) par rapport au support (2), et par un ensemble (5) de support et de déplacement réglable de l'outil de coupe (6) en direction perpendiculaire à l'axe du corps (1).

2. Tête d'alésage, suivant la revendication 1, caractérisée en ce que le dispositif (4) d'indexage du corps (1) par rapport au support (2) est constitué par un téton cylindrique (7) solidaire du support (2) et pouvant coopérer avec des trous (8) de diamètre correspondant disposés à intervalles réguliers sur la face arrière de corps (1), ces trous (8) étant avantageusement au nombre de douze et décalés de 30°.

3. Tête d'alésage, suivant la revendication 1, caractérisée en ce que l'ensemble (5) de support et de déplacement réglable de l'outil (6) est constitué par un piston (9) monté à coulissement avec tolérances très serrées dans un alésage s'étendant perpendiculairement à l'axe du corps (1) près de son extrémité avant, et actionné au moyen d'une vis micrométrique à pas fin (10), qui, d'une part, est munie d'une tête large (11) à flanc incliné, dont le centre est pourvu d'un six pans creux de manoeuvre, et dont le flanc incliné présente des graduations coopérant avec des graduations prévues sur un méplat (12) du corps (1), et, d'autre part, coopère avec un écrou (13) solidaire du piston (9) par collage, une vis pointeau (14) assurant son serrage final, cet écrou (13) étant positionné dans le piston (9) au moyen d'une butée (15) fermant simultanément la cavité de l'écrou opposée à la vis (10) ainsi qu'un trou fileté servant à la fixation d'un porte-plaquette (16) de l'outil (6) sous forme de plaquette au moyen d'une vis (17) et d'une rondelle (18).

4. Tête d'alésage, suivant la revendication 3, caractérisée en ce que le maintien de la vis (10) dans le corps (1) est assuré par un segment élastique (19) fixé dans une gorge de l'alésage du corps (1), par un contre-écrou (20), et par une entretoise (21), dont l'épaisseur est légèrement plus importante que celle du segment (19).

5. Tête d'alésage, suivant la revendication 3, caractérisée en ce qu'afin d'éviter tout jeu de fonctionnement, une rondelle compressible du type Belleville est insérée au montage entre le segment élastique (19) et la face inférieure de la tête de la vis (10), avec une compression préalable, de préférence aux deux tiers, l'épaisseur de l'entretoise (21) étant alors égale à celle du segment (19) augmentée de celle de la rondelle comprimée.

6. Tête d'alésage, suivant la revendication 3, caractérisée en ce que le maintien et le guidage du piston (9) dans son alésage sont assurés par une rainure conique (22) prévue le long d'une génératrice et coopérant avec une aiguille rectifiée (23) à bout conique, dont la pression d'application dans la rainure (22) est réglée au moyen d'une vis (24), une deuxième vis (24') collée dans le filetage assurant l'inviolabilité du réglage, et par une vis (25) de blocage du piston en position, qui s'appuie sur un méplat (25') du piston (9).

7. Tête d'alésage, suivant l'une quelconque des revendications 3 et 6, caractérisée en ce qu'à son extémité libre, le piston (9) est muni d'une rainure (27) de logement du porte-plaquette (16), qui est maintenu appliqué pendant le travail contre un dégagement (28) prévu dans l'extrémité libre du corps (1), le porte-plaquette (16) pouvant être fixé et centré dans le piston (9) de toutes autres manières, à savoir par un centrage en croix, ou autre.

8. Tête d'alésage, suivant l'une quelconque des revendications 3, 6 et 7, caractérisée en ce que le piston (9) est pourvu d'un dégagement longitudinal s'étendant le long d'une génératrice, muni de l'empreinte du pas de la vis micrométrique (10), et destiné à coopérer avec cette dernière, qui présente alors un diamètre plus important et s'étend tangentiellement au piston (9).

9. Tête d'alésage, pour des travaux d'ébauche, constituée par un corps (29) présentant à sa partie arrière une queue de fixation, et à sa partie avant un logement ouvert présentant des côtés légèrement inclinés en s'évasant en direction de la queue, ou des côtés parallèles à l'axe munis de rainures, ou de dentures de guidage rectifiées, par des porte-plaquettes (30 et 31) logés de manière réglable en position dans le corps (29), par une vis de blocage des porte-plaquettes (30 et 31) entre les côtés du logement coopérant avec un trou taraudé (32) d'un côté dudit logement et traversant l'autre côté, ainsi qu'une rainure transversale des porte-plaquettes, et par un dispositif (33) de réglage des porte-plaquette (30 et 31) constitué par deux piges (34, 34') solidaires chacune d'un porte-plaquette (30 et 31) et pénétrant à travers deux rainures parallèles (35 et 36) dans deux trous filetés (37) traversant le corps (29) de part en part, l'une des rainures (36) étant ouverte à une extrémité, et l'autre rainure (35) étant fermée, et l'extension transversale desdites rainures est définie par la longueur de réglage des porte-plaquettes (30 et 31), et par deux paires de vis (38) engagées dans les trous filetés (37) pour actionner en déplacement les piges (34 et 34') à partir des deux côtés des trous (37).

10. Tête d'alésage, suivant la revendication 9, caractérisée en ce que le corps (29) présente sur, chaque côté un dégagement (39) permettant une évacuation aisée des copeaux, ainsi qu'un orifice (40) d'arrivée de lubrifiant de refroidissement, qui arrive à travers des canaux (41) reliés à un canal central arrière (42).

11. Tête d'alésage, suivant la revendication 9, caractérisée en ce qu'un troisième porte-plaquette est monté à la place de l'un des deux premiers porte-plaquettes (30 et 31) et présente un outil décalé longitudinalement par rapport à l'autre outil afin de réaliser une coupe différée et une division de la largeur des copeaux.

12. Tête d'alésage suivant la revendication 1, pour la réalisation de grands diamètres d'alésages, caractérisée en ce qu'elle est constituée par un corps (43) portant les réglages, le piston (9), la fixation et les porte-plaquettes, par une semelle (44) de fixation et de guidage du corps (43) au moyen de vis (46), montée avec possibilité d'indexage sur un attachement et pourvue d'un alésage (47) de centrage sur un moyeu correspondant d'un attachement, connu en soi, cet attachement étant pourvue, en outre, de trous espacés régulièrement sur un diamètre et destinés à coopérer avec des vis (48) pour la fixation et l'indexage de la demelle (44), qui est munie sur sa face tournée vers le corps (43) d'une languette longitudinale (49) destinée à coopérer avec une rainure de centrage correspondante (50) du corps (43), et permettant un déplacement guidé dudit corps (43) sur la semelle (44), et par un dispositif (45) de déplacement guidé du corps (43).

13. Tête d'alésage, suivant la revendication 12, caractérisée en ce que le dispositif (45) de déplacement guidé du corps (43) est constitué par un entraîneur (51) présentant deux méplats parallèles et fixé dans le corps (43), dans l'axe de la rainure (50), par un écrou (52) muni d'une rainure transversale (53) destinée à coopérer avec l'entraîneur (51), guidé en translation dans une rainure (54) de la semelle (44), et entraîné par une vis de réglage (55), qui est assujettie en translation par un montage à gorge et billes (56), et guidée à son autre extrémité dans un logement (57) de la semelle.

14. Tête d'alésage, suivant l'une quelconque des revendications 12 et 13, caractérisée en ce que le maintien et le guidage en déplacement du corps (43) sur la semelle (44), lors du réglage, sont assurés, en outre, par deux piges (58) montées à coulissement dans deux trous (59) percés dans le corps (43) et s'étendant parallèlement à la rainure de centrage (50), ces trous étant réliés à la face d'application du corps (43) sur la semelle (44) chacun par une rainure (60) de passage ces vis de fixation (46), qui sont vissées dans des trous filetés (61) s'étendant perpendiculairement à l'axe des piges (58), qui présentent sur toute leur longueur, du côté des vis (46) un méplat (58') et les trous (59) sont fermés, après montage des piges (58), par des bouchons collés dans les embrèvements (59') prévus à leurs extrémités.

15. Tête d'alésage, suivant la revendication caractérisée en ce qu'entre les trous filetés (61) est prévu un trou fileté supplémentaire (62) orienté dans la même direction que les trous (61), mais, de préférence, de plus faible diamètre, dans lequel pénètrent deux vis (63 et 64), dont l'une (63), coopère avec une rainure (65) du corps (43) et empêche la rotation de la pige (58) correspondante dans son logement et forme un arrêt pour le déplacement du corps (43) sur la semelle (44), tandis que l'autre, (64), tournée vers la semelle (44), dépasse la face correspondante du corps (43) et coopère avec une rainure correspondante (66) de la semelle (44) pour le positionnement du corps (43) sur ladite semelle (44) lors du montage.

16. Tête d'alésage, suivant l'une quelconque des revendications 12 à 15, caractérisée en ce que la semelle (44) est munie d'au moins deux ensembles écrou (52) - vis de réglage (55) et trous pour vis de montage et de blocage (46).

17. Tête d'alésage, suivant l'une quelconque des revendications 12 à 16, caractérisée en ce que, dans le cas de têtes d'alésage de diamètre moyen ne permettant pas une fixation du corps (43) directement sur la semelle (44) au moyen des vis (46), du fait de l'encombrement de l'attachement, il est prévu deux vis (68) présentant une partie (68') munie d'un filetage prénétrant dans un trou (61) d'une pige (58) et une partie mâle (60″) pénétrant dans un alésage de la partie (68′) tourné vers la semelle (44), cette partie (68″) étant retenue dans son alésage par une liaison gorge et billes (69) permettant un pivotement de la partie (68″) après serrage de la partie (68′) dans la pige (58) au moyen de deux méplats (70) de la partie (68′), et la partie (68″) est pourvue, près de son extrémité libre d'un trou conique (71), perpendiculaire à son axe, et dans lequel pénètre une vis à bout conique (72) fixée dans la semelle (44), et dont l'axe est décalé par rapport à celui du trou (71), et dans le prolongement de trou (71) est fixé, avec un léger décalage en direction du corps (43), un ergot (73) permettant le centrage de la base de la vis (68) pendant son introduction dans le trou (67) correspondant de la semelle (44) par coopération avec une rainure (74) dudit trou (67).

18. Tête d'alésage, suivant l'une quelconque des revendications 12 à 17, caractérisée en ce que le corps est sous forme d'un bloc support intermédiaire (75) ou d'un bloc support supérieur (76), le bloc intermédiaire (75) étant fixé de manière réglable sur la semelle (44), centré sur cette dernière au moyen d'une rainure (77), et pourvu de trous filetés (78) de réception des vis de fixation du bloc supérieur (76), qui est guidé sur le bloc intermédiaire (75) au moyen d'une languette (79) coopérant avec une rainure (80) dudit bloc (75), et qui est muni de deux logements supplémentaires de vis de fixation permettant un déplacement supplémentaire du bloc (76) sur le bloc (75).

19. Tête d'alésage, suivant l'une quelconque des revendications 1 à 20, caractérisée en ce que le maintien de la vis micrométrique à pas fin (10) d'actionnement du piston (9) de l'ensemble (5) de support et de déplacement réglable de l'outil (6) est assuré, d'une part, par un épaulement intérieur (86) usiné dans l'alésage de logement du piston (9), et, d'autre part, par un contre-écrou (20′) positionné de manière à buter contre la tête (11) de la vis (10) et à s'appuyer par un bord élargi sous ledit épaulement (86), une rondelle compressible (87) s'appuyant, par ailleurs, sur l'épaulement (86) et sous la tête (11).

20. Tête d'alésage, suivant la revendication 19, caractérisée en ce qu'une gorge de dégagement (88) prévue sous l'épaulement (86) permet la rectification de la partie utile de l'alésage de logement du piston (9), et le positionnement du contre-écrou (20′) avec sa tête inversée permet d'augmenter la longueur du filetage de l'écrou (13) de la vis (10), cet écrou (13) étant à la fleur avec la face du piston (9).

21. Tête d'alésage, suivant la revendication 19, caractérisée en ce que pour les travaux de finition, notamment de petits diamètres, la tête d'alésage est constituée par un corps (90) monté sur un support (2′) et dans lequel sont montés à coulissement radial, parallèles entre eux, un piston (91) de support d'un outil (6′) par l'intermédiaire d'un alésage (93) et un piston (9′) d'actionnement du piston (91) solidarisé avec ce dernier par l'intermédiaire d'une goupille fendue

(92), ou analogue, la commande du déplacement du piston (9′) étant effectuée par une vis micrométrique à pas fin (10) munie d'une tête large (11).

22. Tête d'alésage, suivant la revendication 21, caractérisée en ce que la fixation de l'outil (6′) dans l'alésage (93) du piston de support (91) est effectuée au moyen d'une bague (94) montée dans l'alésage (93) et assujettie en position par une vis-pointeau (95), un épaulement (96) de cette bague (94) étant en saillie hors du corps (90) et protégeant une ouverture (97) de ce dernier nécessaire pour le déplacement de l'outil, une bague fendue (98) pouvant entourer, le cas échéant, la queue de l'outil (6′), et être serrée dans la bague (94) au moyen de vis (99) montées dans des trous filetés (100) du piston (91) et traversant des perçages (101) de la bague (94), cette bague fendue (98) étant munie d'un filetage (104) pour son extraction de la bague (94).

23. Tête d'alésage, suivant l'une quelconque des revendications 21 et 22, caractérisée en ce que le piston (91) est bloqué en position de travail au moyen d'une vis de pression (102) fixée dans le corps (90) et agissant perpendiculairement au sens de déplacement sur un méplat (103) du piston (91).

24. Tête d'alésage, suivant l'une quelconque des revendications 9 à 13, caractérisée en ce que, dans le cas d'une tête d'alésage destinée à des travaux d'ébauche, son corps (29), logeant des porte-plaquettes, (30 et 31), est muni de deux paires opposées de vispointeaux (105) pénétrant dans des trous filetés (106) du corps (29) et s'appliquant par leur extrémité dans une rainure (107) prévue sur les faces correspondantes des porte-plaquettes (30 et 31), et au moins un porte-plaquette est pourvu d'un trou fileté (108) s'étendant obliquement à sa face d'application dans le fond du logement ou d'un trou fileté (109) perpendiculaire à cette face, une vis-pointeau correspondante (110) ou une vis à fond plat (111) étant montée dans le trou (108 ou 109).

25. Tête d'alésage, suivant la revendication 24, caractérisée en ce que pour la lubrification centrale des outils de coupe, il est prévu dans le corps (29) un canal (41′), qui débouche sous la tête de la vis (32′) de serrage des porte-plaquettes (30 et 31), le logement de cette tête présentant une ouverture (112) le mettant en communication avec les rainures transversales (113) des porte-plaquettes (30 et 31), ces rainures (113) formant chambre de répartition pour le liquide et étant réliées chacune par deux trous obliques (114) à des orifices de sortie (40′).

26. Tête d'alésage, suivant l'une quelconque des revendications 12 à 18, caractérisée en ce que, pour l'usinage d'alésages ébauches de grand diamètre, un bloc support supérieur (76′) est muni d'une rainure (116), dont l'ouverture débouche du côté intérieur du bloc, de sorte qu'un outil à plaquette (81) qui y est monté peut être déplacé en direction de ce côté de la vis de réglage du bloc (76′), permettant d'effectuer des travaux de tournage.

27. Tête d'alésage, suivant l'une quelconque des revendications 19 à 24, caractérisée en ce que, pour assurer une fication sans autoserrage de la queue modulaire du support (2) dans son attachement, ou autre pièce femelle de réception, il est prévu un tenon amovible (117) monté dans l'attachement au moyen d'une vis à tête noyée et pourvu d'un trou fileté (118) s'étendant transversalement au tenon, et dans lequel est serrée une vis (119), qui s'appuie par son extrémité sur l'une des faces du logement (120) du support (2) poussant, en réaction, la face opposée du tenon (117) contre l'autre face du logement (120), un trou de passage (121) étant prévu d'un côté du logement pour le passage de l'outil de manoeuvre de la vis (119).

28. Tête d'alésage, suivant la revendication 27, caractérisée en ce que le tenon présente une largeur égale à celle du logement du support (2) et les logements sphériques de la queue de ce dernier sont légèrement décalés par rapport à leur vis de serrage correspondante.

**Patentansprüche**

1. Bohrkopf, bestehend aus einem auf einen Support (2) montierten Körper (1), der mit einem zylindrischen Befestigungsschaft, vom Modulartyp oder ähnlichem, oder einem direkt auf die Maschinen aufsteckbaren Schaft, oder einem Schaft der mit einem Morsekonus oder amerikanischen Konus verbunden werden kann, oder auch mit einem gewindeten TR-Schaft oder ähnlichem versehen, an dem er starr mit Hilfe einer Maschinenschraube (3) befestigt ist, aus einer Vorrichtung (4) zur Indexierung des Körpers (1) in alle Stellungen bezüglich des Supports (2), und aus einer Einheit (5) zur Halterung und regulierbaren Verstellung des Schneidwerkzeugs (6) in senkrechte Richtung zur Achse des Körpers (1).

2. Bohrkopf nach Anspruch 1 dadurch gekennzeichnet, daß die Vorrichtung (4) zur Indexierung des Körpers (1) bezüglich des Supports (2) aus einem mit dem Support (2) fest verbundenen, zylindrischen Zapfen (7) besteht und mit in regelmäßigen Abständen an der Hinterseite des Körpers (1) angeordneten Löchern (8) mit entsprechendem Durchmesser zusammenwirken kann, wobei diese Löcher (8) vorteilhaft zwölf an der Zahl und um 30° versetzt sind.

3. Bohrkopf nach Anspruch 1, dadurch gekennzeichnet, daß die Einheit (5) zur Halterung und regulierbaren Verstellung des Werkzeugs (6) aus einem Kolben (9) besteht, der gleitbar mit sehr engen Toleranzen in einer Bohrung montiert ist, die sich senkrecht zur Achse des Körpers (1) in der Nähe seines vorderen Endes erstreckt, und mittels einer Mikrometerschraube mit Feingewinde (10) betätigt wird, die einerseits mit einem großen Kopf (11) mit geneigter Flanke versehen, deren Zentrum mit einem Innensechskant zur Bedienung ausgestattet ist, und deren geneigte Flanke Einteilungen aufweist, die mit den an einer Abflachung (12) des Körpers (1) vorgesehenen Einteilungen zusammenwirken, und andererseits mit einer Mutter (13) zusammenwirkt, die mit dem Kolben (9) durch Kleben fest verbunden ist, wobei eine Körnerschraube (14) ihre endgültige Feststellung sichert, diese Mutter (13) in dem Kolben (9) mittels eines Anschlags (15) positioniert ist, der gleichzeitig den Hohlraum der der Schraube (10) gegenüberliegenden Mutter sowie ein gewindetes Loch abschließt, das zur Befestigung eines Schneidplattenhalters (16) des Werkzeugs (6) in Plattenform mittels einer Schraube (17) und einer Beilagscheibe (18) dient.

4. Bohrkopf nach Anspruch 3, dadurch gekennzeichnet, daß die Halterung der Schraube (10) in dem Körper (1) durch ein in einer Kehle der Bohrung des Körpes (1) befestigten elastischen Segment (19) durch eine Gegenmutter (20) und durch ein Zwischenstück (21) gesichert ist, das etwas dicker als das Segment (19) ist.

5. Bohrkopf nach Anspruch 3, dadurch gekennzeichnet, daß, um jegliches Spiel beim Lauf zu vermeiden, eine andrückbarer Ring vom Typ Belleville, der vorteilhaft vorher zu zwei Dritteln zusammengedrückt wird, bei der Montage zwischen dem elastische Segment (19) und der Unterseite des Schraubenkopfes (10) eingesetzt wird, wobei dann die Dicke des Zwischenstücks (21) gleich der des Segments (19) zuzüglich der des zusammengedrückten Rings ist.

6. Bohrkopf nach Anspruch 3, dadurch gekennzeichnet, daß die Halterung und Führung des Kolbens (9) in seiner Bohrung durch eine konische Nut (22) gesichert ist, die entlang einer Mantellinie vorgesehen ist und mit einem zugeschliffenen Stift (23) mit konischem Ansatz zusammenwirkt, dessen Auflagedruck in der Nut (22) mittels einer Schraube (24), einer zweiten Schraube (24'), die in das Gewinde geklebt ist und die Verstellung verhindert, und durch eine Schraube (25) zur Feststellung des Kolbens in der Position, die auf einer Abflachung (25') des Kolbens (9) aufliegt, geregelt wird.

7. Bohrkopf nach einem der Ansprüche 3 und 6, dadurch gekennzeichnet, daß der Kolben (9) an seinem freien Ende mit einer Ausnehmung (27) zur Aufnahme des Schneidplatten-Halters (16) versehen ist, der während des Betriebs gegen einen an dem freien Ende des Körpers (1) vorgesehenen Absatz (28) abgestützt gehalten wird, wobei der Schneidplatten-Halter (16) in dem Kolben (9) auf jede andere Art, das heißt, mittels einer Kreuz-Zentrierung, oder ähnlichem, befestigt und zentriert werden kann.

8. Bohrkopf nach einem der Ansprüche 3, 6 und 7, dadurch gekennzeichnet, daß der Kolben (9) mit einem sich entlang einer Mantellinie erstreckenden, länglichen Absatz versehen ist, der mit dem Abdruck der Gewindesteigung der Mikrometerschraube (10) versehen ist, und dazu dient, mit dieser letzteren zusammenzuwirken, die dann einen größeren Durchmesser aufweist und sich tangentiell zu dem Kolben (9) erstreckt.

9. Bohrkopf zur Rohlingsbearbeitung, bestehend aus einem Körper (29), der an seinem hinteren Teil einen Befestigungsschaft, und an seinem Vorderteil eine offene Aufnahme aufweist, die in Richtung Schaft sich konisch erweiternde, leicht geneigte Seiten, oder Seiten, die zu der mit Nuten versehenen Achse parallel verlaufen, oder zugeschliffene Führungs-Verzahnungen besitzt, aus Schneidplatten-Haltern (30 und 31), die in der Position verstellbar in dem Körper (29) sitzen, aus einer Feststellschraube für die Schneidplatten-Halter (30 und 31) zwischen den Seiten der Aufnahme die mit einem gewindeten Loch (32) einer Seite der Aufnahme zusammenwirkt und die andere Seite sowie eine Quernut der Schneidplatten-Halter durchquert, und aus einer Vorrichtung (33) zur Einstellung der Schneidplatten-Halter (30 und 31), bestehend aus zwei Bolzen (34, 34'), die je mit einem Schneidplatten-Halter (30 und 31) verbunden sind und durch zwei parallele Nuten (35 und 36) in zwei Gewindelöcher (37) eintreten, die den Körper (29) von einer zur anderen Seite durchqueren, wobei eine der Nuten (36) an einem Ende offen und die andere Nut (35) geschlossen ist, und die querverlaufende Ausdehnung der Nuten durch die Verstelllänge der Schneidplatten-Halter (30 und 31) definiert wird, und aus zwei Schraubenpaaren (38), welche in die Gewindelöcher (37) eingesetzt sind, um die Bolzen (34 und 34') von beiden Seiten der Löcher (37) aus zu verstellen.

10. Bohrkopf nach Anspruch 9, dadurch gekennzeichnet, daß der Körper (29) an jeder Seite einen Austritt (39) zum leichteren Auswurf der Späne sowie eine Öffnung (40) für den Zulauf der Kühlflüssigkeit aufweist, die durch mit einem hinteren Hauptkanal (42) verbundene Kanäle (41) zufließt.

11. Bohrkopf nach Anspruch 9, dadurch gekennzeichnet, daß ein dritter Schneidplatten-Halter anstelle eines der beiden ersten Schneidplatten-Halter (30 und 31) montiert wird und ein Werkzeug besitzt, das in Längsrichtung bezüglich des anderen Werkzeugs versetzt ist, um einen unterschiedlichen Schnitt und eine Verteilung der Spanbreite durchzuführen.

12. Bohrkopf nach Anspruch 1, zur Durchführung von Bohrungen mit großem Durchmesser, dadurch gekennzeichnet, daß er aus einem Körper (43), der die Einstellelemente, den Kolben (9), die Befestigung und die Schneidplatten-Halter trägt, aus einer Fußplatte (44) zur Befestigung und Führung des Körpers (43) mit Hilfe von Schrauben (46), die mit Indexierungsmöglichkeit an einer Halterung montiert, und mit einer Bohrung (47) für die Zentrierung auf einer, hinreichend bekannten, entsprechenden Nabe einer Halterung versehen ist, wobei diese Halterung, außerdem, mit an einem Durchmesser in regelmäßigen Abständen angebrachten Löchern versehen ist und dazu dienen, mit Schrauben (48) zur Befestigung und Indexierung der Fußplatte (44) zusammenzuwirken, die an ihrer dem Körper (43) zugekehrten Seite mit einer länglichen Lasche (49) versehen ist, die dazu dient, mit einer entsprechenden Zentriernut (50) des Körpers (43) zusammenzuwirken, und eine geführte Verstellung des Körpers (43) auf der Fußplatte (44) ermöglicht, und aus einer Vorrichtung (45) zur geführten Verstellung des Körpers (43), besteht.

13. Bohrkopf nach Anspruch 12, dadurch gekennzeichnet, daß die Vorrichtung (45) zur geführten Verstellung des Körpers (43) aus einem zwei parallele Abflachungen aufweisende und in dem Körper (43), in der Achse der Nut (50) befestigten Mitnehmer (51), aus einer Mutter (52), die mit einer Quernut (53) versehen ist, die dazu dient, mit dem bei der Verstellung in einer Nut (54) der Fußplatte (44) geführten Mitnehmer (51) zusammenzuwirken, und durch eine Stellschraube (55) mitgenommen wird, die bei der Verstellung durch eine Verbindung bestehend aus Rille und Kugeln (56) gehalten wird, und an ihrem anderen Ende in einer Aufnahme (57) der Fußplatte geführt wird.

14. Bohrkopf nach einem der Ansprüche 12 und 13, dadurch gekennzeichnet, daß die Halterung und Führung bei der Verstellung des Körpers (43) auf der Fußplatte (44), während der Einstellung außerdem durch zwei gleitbar in zwei in den Körper (43) gebohrte Löcher (59) montierte Bolzen (58) gewährleistet ist, und sich parallel zu der Zentriernut (50) erstrecken, wobei diese Löcher mit der Einsatzfläche des Körpers (43) auf der Fußplatte (44) jeweils durch eine Nut (60) zur Durchführung der Befestigungsschrauben (46) verbunden sind, welche in sich senkrecht zur der Achse der Bolzen (58) erstreckenden Gewindelöcher (61) geschraubt sind, die über ihre gesamte Länge, von der Seite der Schrauben (46) her, eine Abflachung (58') aufweisen, und die Löcher (59), nach der Montage der Bolzen (58), durch Stopfen verschlossen, die in die an ihren Enden vorgesehenen Versätze (59') geklebt sind.

15. Bohrkopf nach Anspruch 14, dadurch gekennzeichnet, daß zwischen den Gewindelöchern (61) ein zusätzliches Gewindeloch (62) vorgesehen ist, das in die gleiche Richtung wie die Löcher (61) ausgerichtet ist, aber vorzugsweise einen kleineren Durchmesser aufweist, in welches zwei Schrauben (63 und 64) eintreten, wovon eine (63) mit einer Mut (65) des Körpers (43) zusammenwirkt und die Rotation des entsprechenden Führungsstabs (58) in seinem Sitz verhindert und eine Arretierung für die Verstellung des Körpers (43) auf der Fußplatte (44) bildet, während die andere, der Fußplatte (44) zugekehrte, (64), die entsprechende Seite des Körpers (43) überragt und mit einer entsprechenden Nut (66) der Fußplatte (44) zur Positionierung des Körpers (43) auf der Fußplatte (44) bei der Montage zusammenwirkt.

16. Bohrkopf nach einem der Ansprüche 12 bis 15, dadurch gekennzeichnet, daß die Fußplatte (44) mit mindestens zwei Sätzen Mutter (52) - Stellschraube (55) und Löchern für Montage- und Feststellschrauben (46) versehen ist.

17. Bohrkopf nach einem der Ansprüche 12 bis 16, dadurch gekennzeichnet, daß, im Falle von Bohrköpfen mit mittlerem Durchmesser, die keine direkte Befestigung des Körpers (43) auf der Fußplatte (44) mittels der Schrauben (46) wegen des Platzbedarfs der Halterung erlauben, zwei Schrauben (68) vorgesehen sind, die ein mit einem Gewinde versehenes Teil (68') aufweisen, das in ein Loch (61) eines Bolzens (58) eintritt ein Außenteil (60") aufweist, das in eine Bohrung des der Fußplatte (44) zugekehrten Teils (68') eintritt, wobei dieses Teil (68") in seiner Bohrung durch eine Verbindung bestehend aus Rille und Kugeln (69) zurückgehalten wird, wodurch ein Schwenken des Teils (68") nach Feststellung des Teils (68') in dem Bolzen (58) mit Hilfe von zwei Abflachungen (70) des Teils (68') ermöglicht wird, und das Teil (68") in der Nähe seines freien Endes, senkrecht zu seiner Achse, mit einem konischen Loch (71) versehen ist, in das eine in der Fußplatte (44) befestigte Schraube mit konischem Ansatz (72) eintritt, und deren Achse bezüglich der des Loches (71) versetzt ist, und in der Verlängerung des Loches (71), mit leichter Versetzung in Richtung des Körpers (43) eine Nocke (73) befestigt ist, welche die Zentrierung der Basis der Schraube (68) während ihrer Einführung in das entsprechende Loch (67) der Fußplatte (44) durch Zusammenwirken mit einer Nut (74) des Loches (67) ermöglicht.

18. Bohrkopf nach einem der Ansprüche 12 bis 17, dadurch gekennzeichnet, daß der Körper als Zwischen-Supportblock (75) oder als Ober-Supportblock (76) ausgebildet ist, wobei der Zwischenblock (75) verstellbar auf der Fußplatte (44) befestigt, auf dieser mittels einer Nut (77) zentriert, und mit Gewindelöchern (78) zur Aufnahme von Befestigungsschrauben für den oberen Block (76) versehen ist, der auf dem Zwischenblock (75) mittels eines Führungsstabs (79) geführt wird, die mit einer Nut (80) des Blocks (75) zusammenwirkt und mit zwei zusätzlichen Aufnahmen für Befestigungsschrauben versehen ist, welche eine zusätzliche Verschiebung des Blockes (76) auf dem Block (75) ermöglichen.

19. Bohrkopf nach einem der Ansprüche 1 bis 9, dadurch gekennzeichnet, daß die Halterung der Mikrometerschraube mit Feingewinde (10) zur Betätigung des Kolbens (9) der Einheit (5) für die Halterung und die regulierbare Verstellung des Werkzeugs (6) einerseits durch einen in die Bohrung des Kolbens (9) gearbeiteten, inneren Absatz (86), und andererseits durch eine Gegenmutter (20') gewährleistet ist, die so positioniert ist, daß sie an dem Kopf (11) der Schraube (10) anschlägt und sich durch einen erweiterten Rand unter dem Absatz (86) anliegt, wobei eine zusammendrückbare Scheibe (87), übrigens, auf dem Absatz (86) und unter dem Kopf (11) aufliegt.

20. Bohrkopf nach Anspruch 19, dadurch gekennzeichnet, daß eine unter dem Absatz (86) vorgesehene Austrittskehle (88) die Ausrichtung des Arbeitsteils der Bohrung zur Aufnahme des Kolbens (9) ermöglicht, und die Positionierung der Gegenmutter (20') mit ihrem umgekehrten Kopf eine Verlängerung des Gewindes der Mutter (13) der Schraube (10) erlaubt, wobei diese Mutter mit der Fläche des Kolbens (9) bündig ist.

21. Bohrkopf nach Anspruch 19, dadurch gekennzeichnet, daß der Bohrkopf, für die Endfertigung, insbesondere von kleinen Durchmessern, aus einem auf einen Support (2') montierten Körper (90) besteht, in welchem radial gleitbar und zueinander parallel ein Kolben (91) zur Halterung eines Werkzeugs (6') mittels einer Bohrung (93) und ein Kolben (9') zur Betätigung des Kolbens (91) montiert sind, der mit dem letzteren mittels eines Splints (92) oder ähnlichem, fest verbunden ist, wobei die Bedienung zur Verstellung des Kolbens (9') mittels einer mit einem großen Kopf versehenen Mikrometerschraube mit Feingewinde (10) durchgeführt wird.

22. Bohrkopf nach Anspruch 21, dadurch gekennzeichnet, daß die Befestigung des Werkzeugs (6') in der Bohrung (93) des Support-Kolbens (91) mittels eines in der Bohrung (93) befestigten Rings (94) durchgeführt und mittels einer Körnerschraube (95) in der Position befestigt wird, wobei ein Absatz (96) dieses Rings (94) über den Körper (90) hinaussteht und eine Öffnung (97) dieses letzteren schützt, die für die Verstellung des Werkzeugs benötigt wird, und ein Spaltring (98) gegebenenfalls den Schaft des Werkzeugs (6') umgeben, und in den Ring (94) mittels in Gewindelöcher (100) des Kolbens (91) montierte Schrauben (99) geklemmt werden kann, die Bohrungen (101) des Ringes (94) durchqueren, wobei dieser Spaltring (98) mit einem Gewinde (104) zum Herausziehen aus dem Ring (94) versehen ist.

23. Bohrkopf nach einem der Ansprüche 21 und 22, dadurch gekennzeichnet, daß der Kolben (91) in Betriebsstellung mittels einer in dem Körper (90) befestigten Druckschraube (102) festgestellt ist und senkrecht zur Verstellrichtung auf eine Abflachung (103) des Kolbens (91) wirkt.

24. Bohrkopf nach einem der Ansprüche 9 bis 13, dadurch gekennzeichnet, daß im Falle eines Bohrkopfs, der zu Rohlingsarbeiten dient, der die Schneidplatten-Halter (30 und 31) aufnehmende Körper (29) mit zwei einander gegenüberliegenden Paaren von Körnerschrauben (105) versehen ist, welche in Gewindelöcher (106) des Körpers (29) eindringen und mit ihrem Ende auf einer an den entsprechenden Seiten der Schneidplatten-Halter (30 und 31) vorgesehenen Nut (107) aufliegen, und mindestens ein Schneidplatten-Halter mit einem sich schräg zu seiner Einsatzfläche am Boden der Aufnahme erstreckenden Gewindeloch (108), oder mit einem Gewindeloch (109), senkrecht zu dieser Fläche, versehen ist, wobei eine entsprechende Körnerschraube (110) oder eine Schraube mit plattem Fuß (111) in das Loch (108 oder 109) montiert ist.

25. Bohrkopf nach Anspruch 24, dadurch gekennzeichnet, daß für die Zentralschmierung der Schneidwerkzeuge in dem Körper (29) ein Kanal (41') vorgesehen ist, der unterhalb des Kopfes der Schraube (32') zur Feststellung der Schneidplatten-Halter (30 und 31) mündet, wobei die Aufnahme dieses Kopfes eine Öffnung (112) aufweist, die sie mit den Quernuten (113) der Schneidplatten-Halter (30 und 31) in Verbindung setzt, wobei diese Nuten (113) die Verteilkammer für die Flüssigkeit bilden und jeweils durch zwei schräge Löcher (114) mit Austrittsöffnungen (40') verbunden sind.

26. Bohrkopf nach einem der Ansprüche 12 bis 18, dadurch gekennzeichnet, daß, zur Bearbeitung von Rohlingen mit großem Durchmesser ein Ober-Supportblock (76') mit einer Nut (116) versehen ist, deren Öffnung an der Innenseite des Blocks mündet, so daß ein Meißel (81), der dort montiert ist, in Richtung dieser Seite der Einstellschraube des Blocks (76') verstellt werden kann, wodurch die Ausführung von Dreharbeiten ermöglicht wird.

27. Bohrkopf nach einem der Ansprüche 19 bis 24, dadurch gekennzeichnet, daß, um eine Befestigung ohne Selbstschließung des Modular-Schafts des Supports (2) in seiner Halterung oder einer anderen Innenaufnahme zu gewährleisten, ein in der Halterung mittels einer Schraube mit versenktem Kopf montierter, abnehmbarer Zapfen (117) vorgesehen und mit einem Gewindeloch (118) versehen, das sich quer zu dem Zapfen erstreckt, und in welchem eine Schraube (119) festgezogen ist, die mit ihrem Ende auf eine der Seiten der Aufnahme (120) des Supports (2) drückt, und bei Gegendruck die gegenüberliegende Seite des Zapfens (117) gegen die andere Seite der Aufnahme (120) stößt, wobei ein Durchgangsloch (121) an einer Seite der Aufnahme zur Durchführung eines Werkzeugs zur Betätigung der Schraube (119) vorgesehen ist.

28. Bohrkopf nach Anspruch 27, dadurch gekennzeichnet, daß der Zapfen eine Breite aufweist, die gleich der der Aufnahme des Supports (2) ist und die kugeligen Aufnahmen des Schaftes dieses letzteren bezüglich der entsprechenden Feststellschraube leicht versetzt sind.

## Claims

1. A boring head formed by a body (1) mounted on a support (2) which is provided with a cylindrical fixing shank of the modular type or the like, or with a shank which can be adapted directly to the machines, or with a shank which can be attached to the Morse taper or to the American taper, or again with a screw-threaded TR shank, or the like, to which it is rigidly fixed by a connecting screw (3), by a device (4) for indexing in all positions of the body (1) relative to the support (2), and by a unit (5) for the support and adjustable movement of the cutting tool (6) in a direction perpendicular to the axis of the body (1).

2. A boring head according to claim 1, characterised in that the device (4) for indexing the body (1) relative to the support (2) is formed by a cylindrical stud (7) which is integral with the support (2) and can cooperate with holes (8) of corresponding diameter arranged at regular intervals on the rear face of the body (1), these holes (8) advantageously numbering twelve and being offset by 30°.

3. A boring head according to claim 1, characterised in that the unit (5) for support and adjustable movement of the tool (6) is formed by a piston (9) mounted so as to slide with very close tolerances in a bore extending perpendicularly to the axis of the body (1), close to its front end, the piston (9) being actuated by a fine thread micrometric screw (10) which, on the one hand, is provided with a wide head (11) having an inclined flank, of which the centre is provided with a hexagonal socket for manipulation and of which the inclined flank has graduations cooperating with graduations provided on a flattened region (12) of the body (1) and, on the other hand, co-operates with a nut (13) connected to the piston (9) by adhesion, a locking screw (14) gripping it finally, this nut (13) being positioned in the piston (9) by means of a stop member (15) which simultaneously closes the cavity of the nut remote from the screw (10), as well as a screw-threaded hole used for fixing a tool holder (16) for the tool (6) in the form of a tip by means of a screw (17) and a washer (18).

4. A boring head according to claim 3, characterised in that the screw (10) is held in the body (1) by a flexible segment (19) fixed in a groove in the bore of the body (1), by a lock-nut (20) and by a spacer (21) which is slightly thicker than the segment (19).

5. A boring head according to claim 3, characterised in that, to avoid operating clearance, a compressible washer of the Belleville type is inserted, during installation, between the flexible segment (19) and the lower face of the head of the screw (10), with prior compression, preferably by two-thirds, the thickness of the spacer (21) thus being equal to that of the segment (19) increased by that of the compressed washer.

6. A boring head according to claim 3, characterised in that the piston (9) is held and guided in its bore by a conical groove (22) provided along a generatrix and cooperating with a straightened, conically tipped needle (23), whose pressure of application in the groove (22) is adjusted by means of a screw (24), a second screw (24') stuck in the screw thread rendering adjustment tamperproof, and by a screw (25) for locking the piston in position, which rests on a flattened region (25') of the piston (9).

7. A boring head according to any one of claims 3 and 6, characterised in that, at its free end, the piston (9) is provided with a groove (27) housing the tool holder (16) which is held, during operation, against a recess (28) provided in the free end of the body (1), the tool holder (16) being adapted to be fixed and centred in the piston (9) in any other way, that is to say by centring with a cross, or the like.

8. A boring head according to any one of claims 3, 6 and 7, characterised in that the piston (9) is provided with a longitudinal recess which extends along a generatrix, is quipped with the imprint of the pitch of the micrometric crew (10) and is designed to cooperate with the micrometric crew (10), which therefore has a greater diameter and extends tangentially to the piston (9).

9. A boring head for roughing operations, formed by a body (29) having, at its rear, a fixing shank and, at its front, an open housing having sides which are slightly inclined and flare out toward the shank, or sides parallel to the axis provided with grooves, or straightened guiding teeth, by tool holders (30 and 31) housed in an adjustable position in the body (29), by a screw for locking the tool holders (30 and 31) between the sides of the housing and mating with a tapped hole (32) on one side of said housing and traversing the other side, as well as a transverse groove in the tool holders, and by a device (33) for adjusting the tool holders (30 and 31) formed by two rods (34, 34') each integral with a tool holder (30 and 31) and penetrating through two parallel grooves (35 and 36) into two screw-threaded holes (37) traversing the body (29) from one side to the other, one of the grooves (36) being opened at one end and the other groove (35) being closed, and the transverse extension of said grooves is defined by the length of adjustment of the tool holders (30 and 31), and by two pairs of screws (38) engaging in screw-threaded holes (37) in order to shift the rods (34 and 34') from the two sides of the holes (37).

10. A boring head according to claim 9, characterised in that the body (29) has, on each side, a recess (39) allowing easy discharge of the chippings as well as an inlet orifice (40) for cooling lubricant which arrives through ducts (41) connected to a central rear duct (42).

11. A boring head according to claim 9, characterised in that a third tool holder is installed in the position of one of the first two tool holders (30 and 31) and has a tool which is offset longitudinally relative to the other tool so as to produce a different cut and to divide the width of the chippings.

12. A boring head according to claim 1, for producing large diameter bores, characterised in that it is formed by a body (43) having settings, the piston (9), the fixing and the tool holders, by a plate (44) for fixing and guiding the body (43) by means of screws (46), which is mounted with the possibility of indexing on a fitting and is provided with a bore (47) for centring it on a corresponding hub of a fitting known per se, this fitting also being provided with holes which are evenly spaced over a diameter and are intended to co-operate with screws (48) for fixing and indexing the plate (44) which is provided on its face directed toward the body (43) with a longitudinal tab (49) intended to cooperate with a corresponding centring groove (50) in the body (43) and allowing guided movement of said body (43) on the plate (44), and by a device (45) for the guided movement of the body (43).

13. A boring head according to claim 12, characterised in that the device (45) for guided movement of the body (43) is formed by a driver (51) which has two parallel flattened regions and is fixed in the body (43), in the axis of the groove (50), by a nut (52) which is provided with a transverse groove (53) intended to cooperate with the driver (51), is guided to perform translational movement in a groove (54) in the plate (44), and is driven by an adjusting screw (55) which is caused to perform translational movement by a ball and groove assembly (56) and is guided at its other end in a housing (57) in the plate.

14. A boring head according to any one of claims 12 and 13, characterised in that the body (43) is also held and guided in movement on the plate (44), during adjustment, by two rods (58) mounted so as to slide in two holes (59) drilled in the body (43) and extending parallel to the centring groove (50), these holes each being connected to the face for application of the body (43) against the plate (44) by a groove (60) for the passage of fixing screws (46) which are screwed into screw-threaded holes (61) extending perpendicularly to the axis of the rods (58) which have a flattened region (58') over their entire length on the side facing the screws (46), and the holes (59) are closed after installation of the rods (58) by stoppers which are stuck in joggles (59') provided at their ends.

15. A boring head according to claim 14, characterised in that, between the screw-threaded holes (61), there is provided an additional screw-threaded hole (62) which is orientated in the same direction as the holes (61) but is preferably of smaller diameter and in which two screws (63 and 64) penetrate, one of which (63) mates with a groove (65) in the body (43) and prevents the corresponding rod (58) from rotating in its housing and forms a stop for the movement of he body (43) on the plate (44) while the other (64) is turned toward the plate (44), goes beyond the corresponding face of the body (43) and co-operates with a corresponding groove (66) in the plate (44) for positioning the body (43) on said plate (44) during assembly.

16. A boring head according to any one of claims 12 to 15, characterised in that the plate (44) is provided with at least two assemblies of nut (52) and adjusting screw (55) and holes for assembly and locking screws (46).

17. A boring head according to any one of claims 12 to 16, characterised in that, in the case of boring heads of average diameter which do not allow the body (43) to be fixed directly on the plate (44) by means of screws (46), owing to the bulk of the fitting, there are provided two screws (68) having a part (68') provided with a screw thread penetrating into a hole (61) in a rod (58) and a male part (68") penetrating into a bore in the part (68') turned toward the plate (44), this part (68") being held in its bore by a ball and groove joint (69) allowing the part (68") to pivot after the part (68') has been gripped in the rod (58) by means of two flattened regions (70) of the part (68'), and the part (68") is provided, close to its free end, with a conical hole (71) perpendicular to its axis and in which there penetrates a conically tipped screw (72) fixed in the plate (44) and of which the axis is offset relative to that of the hole (71) and, in the extension of the hole (71), here is fixed with a slight offset in the direction of the body (43) a pin (73) allowing centring of the base of the screw (68) as it is being introduced into the corresponding hole (67) in the plate (44) by mating with a groove (74) in said hole (67).

18. A boring head according to any one of claims 12 to 17, characterised in that the body is in the form of an intermediate support block (75) or upper support block (76), the intermediate block (75) being fixed adjustably on the plate (44), being centred on this plate (44) by means of a groove (77) and being provided with screw-threaded holes (78) for receiving screws for fixing the upper block (76) which is guided on the intermediate block (75) by means of a tab (79) cooperating with a groove (80) in said block (75) and which is provided with two additional housings for fixing screws allowing additional movement of the block (76) on the block (75).

19. A boring head according to any one of claims 1 to 9, characterised in that the fine thread micrometric screw (10) for actuation of the piston (9) of the assembly (5) for support and adjustable movement of the tool (6) is held, on the one hand, by an internal shoulder (86) machined in the housing bore of the piston (9) and, on the other hand, by a lock-nut (20') positioned in an abutting manner against the lead (11) of the screw (10) and supported by an enlarged rim under the said shoulder (86), a compressible washer (87) also resting on the shoulder (86) and beneath the head (11).

20. A boring head according to claim 19, characterised in that a recessed groove (88) provided beneath the shoulder (86) allows the useful part of the bore housing the piston (9) to be straightened, and the positioning of the lock-nut (20') with its inverted head allows the length of the screw thread of the nut (13) of the screw (10) to be increased, this nut (13) being on a level with the face of the piston (9).

21. A boring head according to claim 19, characterised in that, for finishing work, in particular of small diameters, the boring head is formed by a body (90) which is mounted on support (2') and in which there are installed, so as to slide radially, in parallel, a piston (91) for supporting a tool (6') by means of a bore (93) and a piston (9') for actuating the piston (91) which is connected to the piston (91) by means of a split pin (92) or the like, the movement of the piston (9') being controlled by a fine pitch micrometric screw (10) provided with a wide head (11).

22. A boring head according to claim 21, characterised in that the tool (6') is fixed in the bore (93) of the supporting piston (91) by means of a ring (94) installed in the bore (93) and secured in position by a locking screw (95), a shoulder (96) of this ring (94) projecting outside the body (90) and protecting an opening (97) therein which is required for the movement of the tool, a split ring (98) being capable of surrounding the shank of the tool (6'), if necessary, and being capable of being gripped in the ring (94) by means of screws (99) fitted in screw-threaded holes (100) in the piston (91) and traversing perforations (101) in the ring (94), this split ring (98) being provided with a screw thread (104) for extracting it from the ring (94).

23. A boring head according to any one of claims 21 and 22, characterized in that the piston (91) is locked in the operating position by means of a set screw (102) fixed in the body (90) and acting perpendicularly to the direction of movement on a flattened region (103) of the piston (91).

24. A boring head according to any one of claims 9 to 13, characterized in that, in the case of a boring head intended for roughing work, its body (29), which houses the tool holders (30 and 31), is provided with two opposing pairs of locking screws (105) which penetrate in screw-threaded holes (106) in the body (29) and are placed by their end in a groove (107) provided on the corresponding faces of the tool holders (30 and 31), and at least one tool holder is provided with a screw-threaded hole (108) extending obliquely to the face by which it is placed in the bottom of the housing or with a screw-threaded hole (109) perpendicular to this face, a corresponding locking screw (110) or a flat bottomed screw (111) being fitted in the hole (108 or 109).

25. A boring head according to claim 24, characterized in that, for central lubrication of the cutting tools, a duct (41') is provided in the body (29) and issues beneath the head of the screw (32') for gripping the tool holders (30 and 31), the housing of this head having an opening (112) connecting it to the transverse grooves (113) of the tool holders (30 and 31), these grooves (113) forming a distributing chamber for the liquid and each being connected by two oblique holes (114) to outlet orifices (40').

26. A boring head according to any one of claims 12 to 18, characterized in that, for the machining of large diameter rough bores, an upper supporting block (76') is provided with a groove (116), the opening of which issues on the internal side of the block so that a tool with tip (81) fitted therein can be moved in the direction of this side of the screw for adjusting the block (76'), allowing turning work to be carried out.

27. A boring head according to any one of claims 19 to 24, characterized in that, to allow fixing without self-gripping of the modular shank of the support (2) in its fitting or another female receiving part, there is provided a removable tenon (117) installed in the fitting by means of a countersunk screw and provided with a screw-threaded hole (118) extending transversely to the tenon and in which there is gripped a screw (119) which rests by its end on one of the faces of the housing (120) of the support (2) and, as a reaction, pushes the opposite face of the tenon (117) against the other face of the housing (120), a passage (121) being provided on one side of the housing for the passage of the screw manipulating tool (119).

28. A boring head according to claim 27, characterized in that the tenon has a width equal to that of the housing of the support (2) and the spherical housings of the shank thereof are slightly offset relative to their corresponding gripping screw.

Fig. 1

Fig. 2

EP 0 163 796 B1

Fig.3

Fig.4

Fig.5

Fig.6

**Fig.7**

**Fig.8**

**Fig.9**

**Fig.12**

**Fig.11**

Fig.10

B

44

48

52
53
67
72

74

66
54

66

67'

45

B

Fig.13

44

48

48

Fig.14

D

78

C

C

77

75

D

Fig.15

78

75

EP 0 163 796 B1

Fig.16

Fig.17

Fig.18

EP 0 163 796 B1

Fig. 19

Fig. 20

Fig. 22

Fig.23

Fig.24

Fig.25

Fig.26

Fig. 27

Fig. 21

Fig. 29

Fig. 28

EP 0 163 796 B1